# EUROPÄISCHE PATENTSCHRIFT

(11) **EP 3 871 376 B1**
(45) Veröffentlichungstag und Bekanntmachung des Hinweises auf die Patenterteilung: **05.11.2025**
(21) Anmeldenummer: 19773045.0
(22) Anmeldetag: 18.09.2019
(51) Int. Cl.: H04L 12/40, H04L 41/0813, B60W 50/00, H04L 41/00

(54) **STEUERGERÄT**
CONTROL UNIT
UNITÉ DE CONTRÔLE

(30) Priorität: 25.10.2018 DE 102018218257
(43) Veröffentlichungstag der Anmeldung: 01.09.2021
(73) Patentinhaber: Robert Bosch GmbH, 70442 Stuttgart (DE)
(72) Erfinder: PETERS, Matthias, 74182 Obersulm (DE); WALTHER, Roman, 71636 Ludwigsburg (DE); HEIDEMANN, Richard, 74243 Langenbrettbach (DE)
(86) Internationale Anmeldenummer: PCT/EP2019/075090
(87) Internationale Veröffentlichungsnummer: WO 2020/083577

(56) Entgegenhaltungen:
- EP-A1- 1 858 206
- DE-A1- 102005 024 559
- DE-A1- 102011 102 770

## Beschreibung

Die Erfindung betrifft ein Steuergerät für ein Fahrzeug und ein Verfahren zum Einstellen wenigstens eines Parameters einer Datenübertragung des Steuergerätes.

### Stand der Technik

Im Stand der Technik ist der Datenaustausch mit einem Steuergerät eines Fahrzeuges fest vorkonfiguriert.

Die Offenlegungsschrift EP 1 858 206 A1 offenbart ein Verfahren und eine Vorrichtung zum Steuern von Netzwerksegmenten eines Netzwerks in einem Kraftfahrzeug.

### Offenbarung der Erfindung

Eine Aufgabe der Erfindung besteht darin, ein Steuergerät mit einer erhöhten Flexibilität beim Datenaustausch und ein Verfahren zum Einstellen wenigstens eines Parameters einer Datenübertragung eines Steuergerätes für ein Fahrzeug bereitzustellen.

Die Aufgabe der Erfindung wird durch die unabhängigen Patentansprüche gelöst. In den abhängigen Ansprüchen sind weitere Ausführungen des Steuergerätes und des Verfahrens beschrieben.

Ein Vorteil des beschriebenen Steuergerätes besteht darin, dass im Datenspeicher des Steuergerätes eine erste Liste mit ersten Referenznummern abgelegt ist. Jeder ersten Referenznummer ist wenigstens ein Datum eines Messwertes oder Steuerwertes eines Sensors beziehungsweise Aktors zugeordnet. Zudem ist im Datenspeicher eine zweite Liste mit zweiten Referenznummern abgespeichert. Jeder zweiten Referenznummer ist jeweils wenigstens ein Parameter einer Datenübertragung zugeordnet. Die erste Referenznummer kann veränderbar einer zweiten Referenznummer zugeordnet werden. Zudem ist das Steuergerät ausgebildet, um die Daten der ersten Referenznummer gemäß dem Parameter der Datenübertragung der zweiten Referenznummer zu empfangen und/oder zu senden. Somit kann auf einfache Weise die Art der Datenübertragung eines Datums verändert werden.

Somit ist eine erhöhte Flexibilität des Steuergerätes zum Datenaustausch mit anderen Steuergeräten, Sensoren und/oder Aktoren gegeben. Beispielsweise kann auf diese Weise das Steuergerät mit einem weiteren Steuergerät, das eine andere Artikel der Datenübertragung verwendet, zu einem Datenaustausch konfiguriert werden, indem die entsprechende Zuordnung der ersten Referenznummer zu einer entsprechenden zweiten Referenznummer vorgenommen wird. Dies ist insbesondere von Vorteil, wenn ein Steuergerät an verschiedene andere Steuergeräte zum Datenaustausch angepasst werden soll. Insbesondere kann die Anpassung der Datenkommunikation des Steuergerätes auch nach dem Serienanlauf und auch nach dem Verkauf des Steuergerätes später durch einen Nutzer des Steuergerätes beziehungsweise durch einen Nutzer des Fahrzeuges entsprechend angepasst werden. Diese Vorgehensweise ist insbesondere in Märkten von Vorteil, bei denen eine hohe Anpassbarkeit der Datenkommunikation des Steuergerätes von Vorteil ist, wenn eine hohe Varianz an Fahrzeugen mit einer geringen Stückzahl in den Märkten gewünscht wird. Somit kann auf eine einfache Weise eine individuelle Konfiguration des Datenaustausches des Steuergerätes vorgenommen werden.

In einer Ausführungsform ist das Steuergerät ausgebildet, um bei einem Empfang von vorgegebenen Steuerdaten eine festgelegte Zuordnung zwischen einer ersten Referenznummer und einer zweiten Referenznummer zu ändern. Beispielsweise kann erstmalig eine erste Referenznummer einer zweiten Referenznummer zugeordnet werden. Zudem kann eine bereits bestehende Zuordnung einer ersten Referenznummer zu einer zweiten Referenznummer geändert werden und die erste Referenznummer einer anderen zweiten Referenznummer zugeordnet werden. Mithilfe dieser Ausbildung des Steuergerätes kann das Steuergerät von extern durch Vorgabe von entsprechenden Steuerdaten in der Weise konfiguriert werden, dass wenigstens ein gewünschter Parameter der Datenübertragung der Daten einer ersten Referenznummer auf einfache Weise festgelegt beziehungsweise geändert werden kann.

In einer weiteren Ausführungsform ist das Steuergerät ausgebildet, um über den Empfang eines Diagnosesignals eine Festlegung und/oder eine Änderung einer Zuordnung zwischen einer ersten Referenznummer und einer zweiten Referenznummer vorzunehmen. Somit kann beispielsweise bei einem Werkstattbesuch mithilfe einer Recheneinheit, die einen Diagnoseservice an dem Steuergerät ausführt, die Datenkommunikation des Steuergerätes verändert werden. Abhängig von der gewählten Ausführungsform kann das Steuergerät für den Anschluss der Recheneinheit für den Diagnoseservice einen separaten Anschluss aufweisen. Auf diese Weise kann während eines Werkstattbesuches beispielsweise bei einem Kundendienst die Datenkommunikation des Steuergerätes zum Senden und/oder zum Empfangen von Daten auf einfache Weise geändert beziehungsweise angepasst werden.

In einer weiteren Ausführungsform weist die zweite Referenznummer wenigstens einen der folgenden Parameter für die vorgegebene Datenübertragung auf: Art des Netzwerk-Rahmens, Startbit für den Datenrahmen, Typ des Netzwerkes und Auflösung des Netzwerkes. Diese Parameter der Datenübertragung sind nicht abschließend, sondern es können auch andere Parameter der Datenübertragung einer zweiten Referenznummer zugeordnet sein. Durch die Vorgabe wenigstens eines Parameters für die Datenübertragung kann die Art und Weise der Datenübertragung für die Daten einer entsprechend zugeordneten ersten Referenznummer festgestellt werden. Die Art des verwendeten Parameters hängt auch von der Art des verwendeten Netzwerkes ab.

In einer Ausführungsform weist eine erste Referenznummer wenigstens eines der folgenden Merkmale auf: Übertragungsrichtung, Datentyp, Datenname, Datengenauigkeit. Diese Merkmale sind nicht abschließend, sondern beispielhaft. Mithilfe dieser Merkmale können die Daten, die der ersten Referenznummer zugeordnet sind, genauer beschrieben werden.

In einer weiteren Ausführungsform sind die ersten Referenznummern und die zugeordneten Daten in einem gegen Veränderung geschützten Bereich des Datenspeichers abgelegt, sodass die ersten Referenznummern und die zugeordneten Daten nicht durch einen externen Steuerbefehl verändert werden können. Insbesondere sind die ersten Referenznummern und die zugeordneten Daten gegenüber einer Änderung durch einen Steuerbefehl einer Recheneinheit eines Diagnoseservices geschützt. Im Gegensatz dazu sind die zweiten Referenznummern in einem über externe Steuersignale veränderbaren Bereich des Speichers abgelegt. Somit können sowohl die zweiten Referenznummern als auch die Parameter der Datenübertragung, die den zweiten Referenznummern zugeordnet sind, durch ein externes Steuersignal verändert werden. Insbesondere können die zweiten Referenznummern und die den zweiten Referenznummern zugeordneten Parameter der Datenübertragung über externe Steuersignale einer Recheneinheit, die einen Diagnoseservice der Steuereinheit ausführt, verändert werden. Somit ist eine einfache Veränderung und Anpassung der Art der Datenkommunikation des Steuergerätes möglich.

In einer Ausführungsform ist wenigstens ein Teil der ersten Referenznummern jeweils einem Datenport eines Datenprotokolls zugeordnet. Das Steuergerät ist dabei ausgebildet, um die Daten einer ersten Referenznummer über den zugeordneten Datenport des Datenprotokolls zu empfangen und/oder um die Daten einer ersten Referenznummer über den zugeordneten Datenport des Datenprotokolls zu senden. Auf diese Weise kann eine einfache Anpassung der Datenübertragung von Daten eines festgelegten Datenportes eines Datenprotokolls erreicht werden.

Es wird ein Verfahren zum Einstellen wenigstens eines Parameters einer Datenübertragung eines Steuergerätes für ein Fahrzeug vorgeschlagen. Das Steuergerät weist eine Schnittstelle zum Austauschen von Daten eines Sensors oder Aktors mit einer Recheneinheit, insbesondere einem weiteren Steuergerät auf. In dem Datenspeicher des Steuergerätes ist eine erste Liste mit mehreren ersten Referenznummern abgelegt. Zudem ist jeweils einer ersten Referenznummer wenigstens ein Datum eines Sensors oder eines Aktors zugeordnet. Zudem ist im Datenspeicher eine zweite Liste mit zweiten Referenznummern abgespeichert. Den zweiten Referenznummern ist jeweils wenigstens ein Parameter einer vorgegebenen Datenübertragung zugeordnet.

Bei Empfang eines vorgegebenen Steuerbefehls wird eine Referenznummer einer zweiten Referenznummer zugeordnet. Die Daten einer ersten Referenznummer werden gemäß der zugeordneten zweiten Referenznummer mit dem Parameter der Datenübertragung der zugeordneten zweiten Referenznummer empfangen und/oder gesendet. Auf diese Weise wird ein einfaches und praktisches Verfahren zum Ändern einer Datenübertragung von Daten des Steuergerätes erhalten.

In einer Ausführungsform kann auch eine Art der Überwachung der Datenübertragung geändert werden. Nicht nur die eigentliche Datenübertragung, sondern auch deren Überwachung kann umkonfiguriert werden. Überwachungsmechanismen von Daten und/oder Signalen von verschiedenen Steuergeräten können zu Inkompatibilitäten im Fahrzeugbus führen. Wurde z.B. die Ausgabe-Periode eines Signals aufgrund der Nutzung eines neuen Sensors geändert, kann eine unangepasste Überwachung regelmäßig zu Fehlereinträgen in Steuergeräten führen, die dann ihre Funktion degradieren oder ganz abschalten. Auch z.B. Alterungserscheinungen bei Sensoren oder Aktoren können dazu führen, dass gewisse Überwachungsgrenzen aufgeweicht werden müssen.

Ausführungsbeispiele der Erfindung werden anhand der folgenden Figuren näher erläutert. Es zeigen
- Figur 1: eine schematische Darstellung eines Fahrzeuges mit einem Steuergerät und einem externen Steuergerät,
- Figur 2: eine schematische Darstellung einer ersten Liste mit ersten Referenznummern und einer zweiten Liste mit zweiten Referenznummern,
- Figur 3: einen schematischen Programmablauf zum Konfigurieren einer Datenübertragung eines Steuergerätes und
- Figur 4: eine weitere Ausführungsform für ein Verfahren, bei dem Parameter für den Empfang und/oder das Senden von Daten durch das Steuergerät verändert werden.

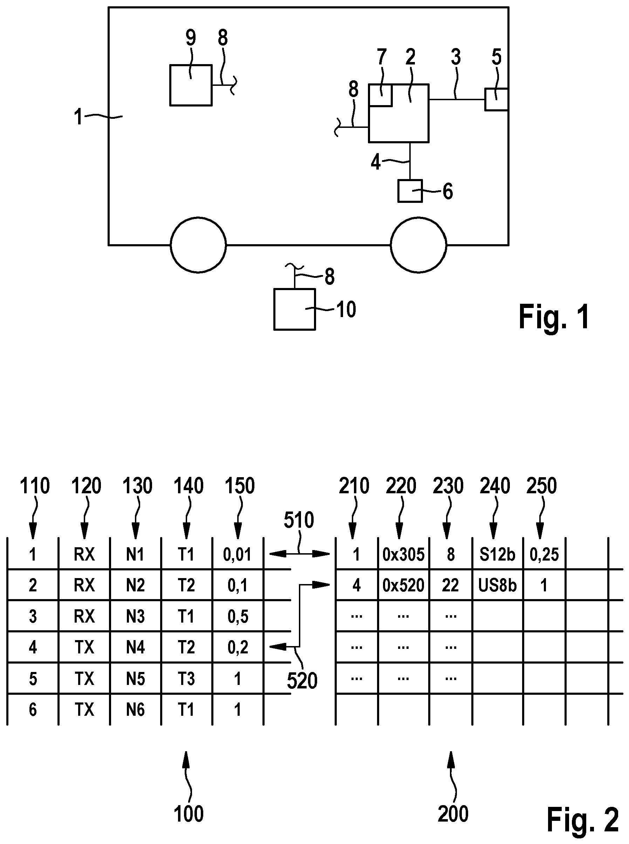

Figur 1 zeigt in einer schematischen Darstellung ein Fahrzeug 1, das ein Steuergerät 2 aufweist. Das Steuergerät 2 steht über Daten- und Steuerleitungen 3, 4 mit wenigstens einem Sensor 5 und/oder mit wenigstens einem Aktor 6 in Verbindung. Der Sensor 5 kann beispielsweise ein Geschwindigkeitssensor zur Erfassung der Geschwindigkeit des Fahrzeuges sein. Der Aktor 6 kann beispielsweise vorgesehen sein, um eine Bremse des Fahrzeuges zu betätigen. Unter einem Fahrzeug wird jede Art von Fahrzeug, insbesondere auf dem Wasser bewegliche Fahrzeuge, auf dem Land bewegliche Fahrzeuge oder in der Luft bewegliche Fahrzeuge verstanden. Beispielsweise werden unter einem Fahrzeug Flugzeuge, Autos, aber auch bewegliche Baumaschinen oder Landmaschinen verstanden, die über einen eigenen Antrieb verfügen.

Weiterhin weist das Steuergerät 2 einen Datenspeicher 7 auf. Im Datenspeicher 7 können Daten und/oder Programme abgelegt sein, die das Steuergerät 2 benötigt, um die zugeordneten Aufgaben auszuführen. Insbesondere kann das Steuergerät 2 ausgebildet sein, um den Aktor 6 gemäß einem Betriebszustand des Fahrzeuges 1 beziehungsweise eines Antriebes des Fahrzeuges 1 anzusteuern. Zudem kann das Steuergerät 2 ausgebildet sein, um Messwerte des Sensors 5 zu erfassen und abzuspeichern. Das Steuergerät 2 weist zudem eine Schnittstelle 8 auf, über die Daten mit einer Recheneinheit, insbesondere mit einem weiteren Steuergerät 9 des Fahrzeuges 1 oder einem externen Steuergerät ausgetauscht werden. Zudem ist die Schnittstelle 8 ausgebildet, um Daten mit einer Recheneinheit in Form eines Testgerätes 10 für eine Diagnose des Steuergerätes 2 auszutauschen. Das Testgerät 10 für die Diagnose des Steuergerätes ist außerhalb des Fahrzeuges 1 angeordnet und wird üblicherweise bei einem Kundendienst des Fahrzeuges 1 verwendet, um Daten vom Steuergerät 2 auszulesen, insbesondere Daten mit dem Steuergerät 2 auszutauschen.

Abhängig von der gewählten Ausführungsform können wenigstens ein Sensor und/oder wenigstens ein Aktor über die Schnittstelle 8 mit dem Steuergerät 2 kommunizieren. Für eine Kommunikation über die Schnittstelle 8 wird ein Datenprotokoll, insbesondere ein Netzwerkprotokoll verwendet. Beispielsweise kann das Datenprotokoll als CAN-Bus-Datenprotokoll ausgebildet sein. Es können jedoch auch anderen Datenprotokolle verwendet werden. Es können auch weitere Netzwerke, wie zum Beispiel Ethernet, zur Kommunikation zwischen zwei Steuergeräten eines Fahrzeuges über die Schnittstelle 8 verwendet werden. Es können jedoch auch Netzwerke wie zum Beispiel LIN, MOST oder FlexRay verwendet werden. Dabei können Netzwerkprotokolle eingesetzt werden, die nach dem sogenannten TCP/IP-Referenzmodell in vier aufeinander aufbauenden Schichten aufgebaut sind. Beispielsweise kann als Hardware Ethernet, als Transportprotokoll DOIP (ISO 13400) und als Diagnoseprotokoll UDS (ISO 14229) verwendet werden. Zudem kann beispielsweise als Netzwerk ein CAN-Bus und als Transprotokoll ISO-TP (gemäß ISO Norm 15765-2) und als Diagnoseprotokoll ISO-OBD (gemäß ISO Norm 15031) verwendet werden. Jedes dieser Datenprotokolle kann einen unterschiedlichen Datenaufbau, insbesondere unterschiedliche Netzwerkrahmen, eine unterschiedliche Position des Startbits für das Nutzsignal, einen unterschiedlichen Netzwerktyp und eine unterschiedliche Netzwerkauflösung und unterschiedliche Datenports für festgelegte Daten aufweisen.

Das vorgeschlagene Steuergerät 2 weist den Vorteil auf, dass die Art der Datenübertragung verändert werden kann. Dies kann beispielsweise mithilfe eines Testgerätes 10 für eine Diagnose des Steuergerätes 2 durchgeführt werden.

Das Steuergerät 2 weist beispielsweise, wie in Figur 2 dargestellt ist, eine erste Liste 100 auf. In der ersten Liste 100 sind in einer ersten Spalte 110 erste Referenznummern gegeben. Beispielsweise sind in der Figur 2 in der ersten Spalte 110 die ersten Referenznummern 1, 2, 3, 4, 5, 6 fortlaufend usw. eingetragen. Jeder ersten Referenznummer ist wenigstens ein Parameter des Datums zugeordnet. Insbesondere stellen die ersten Referenznummern die Datenports dar, bei denen das Steuergerät 2 die entsprechenden Daten im Datenprotokoll überträgt. Beispielsweise ist in der ersten Liste 100 eine zweite Spalte 120, eine dritte Spalte 130, eine vierte Spalte 140 und eine fünfte Spalte 150 vorgesehen. In der zweiten Spalte 120 ist beispielsweise die Übertragungsrichtung festgelegt. Die Übertragungsrichtung legt fest, ob die Daten gesendet oder empfangen werden. In dem vorgeschlagenen Beispiel ist mit RX festgelegt, dass die Daten empfangen werden. Zudem ist mit der Bezeichnung TX festgelegt, dass die Daten gesendet werden. In der dritten Spalte 130 sind die Daten abgelegt. N1 bedeutet beispielsweise Fahrzeuggeschwindigkeit. N2 bedeutet beispielsweise Lenkradwinkel. N3 bedeutet beispielsweise Drehrate. N4 bedeutet beispielsweise Sensorzustand. N5 bedeutet beispielsweise Zone 1 und N6 bedeutet beispielsweise Zone 2. In der vierten Spalte 140 ist beispielsweise der Datentyp beschrieben, mit dem das Datum übertragen wird. Beispielsweise bedeutet T1 unsigniertes Wort (unsigned word). T2 bedeutet signiertes langes Wort (signed long). T3 bedeutet beispielsweise signiertes kurzes Wort (unsigned short).

In der fünften Spalte 150 sind Werte für die Auflösung des Datums abgelegt. In der ersten Zeile der fünften Spalte 150 steht der Wert 0,01. In der zweiten Zeile der fünften Spalte 150 steht der Wert 0,1 usw. Die erste Liste 100 ist im Datenspeicher 7 des Steuergerätes 2 abgelegt.

Zusätzlich zu der ersten Liste 100 weist der Datenspeicher 7 eine zweite Liste 200 auf. Die zweite Liste 200 ist wieder in Form von Zeilen und Spalten aufgebaut. In der zweiten Liste 200 sind in der ersten Spalte 210 zweite Referenznummern angegeben. Für jede der zweiten Referenznummern sind in der Zeile der jeweiligen zweiten Referenznummer weitere Informationen über wenigstens einen Parameter eines Datenprotokolls abgelegt. Beispielsweise sind in der zweiten Spalte 220 der zweiten Liste 200 Informationen über den Netzwerkrahmen abgelegt. Beispielsweise ist in der ersten Zeile der zweiten Spalte 220 der Netzwerkrahmen 0x305 gespeichert. In der zweiten Zeile der zweiten Spalte 220 ist der Netzwerkrahmen 0x520 gespeichert. Mithilfe des Netzwerkrahmens wird der Aufbau des Datenprotokolls beschrieben. In der dritten Spalte 230 der zweiten Liste 200 sind die Datenbits angegeben, zu denen der Rahmen für die Nutzdatenübertragung startet. In der ersten Zeile der dritten Spalte 230 ist das Startbit 8 eingetragen. In der zweiten Zeile der dritten Spalte 230 der zweiten Liste 200 ist das Startbit 22 eingetragen.

In einer vierten Spalte 240 sind Informationen über den Netzwerktyp abgelegt. Beispielsweise ist in der ersten Zeile der vierten Spalte 240 der Netzwerktyp signed 12 bit (s12b) abgelegt. In der zweiten Zeile der vierten Spalte 240 ist der Netzwerktyp unsigned 8 bit (us8b) abgelegt. Somit ist eindeutig der Netzwerktyp festgelegt. In der fünften Spalte 250 der zweiten Liste 200 sind Informationen über die Netzwerkauflösung abgelegt. Beispielsweise ist in der ersten Zeile der fünften Spalte 250 der Wert 0,25 abgespeichert. In der zweiten Zeile der fünften Spalte 250 ist der Wert 1 abgespeichert.

Zwischen den Zeilen der ersten Liste 100 und der zweiten Liste 200 sind Zuordnungspfeile 510, 520 dargestellt. Die Zuordnungspfeile 510, 520 symbolisieren mit welcher Art von Datenübertragung das Datum einer ersten Referenznummer der ersten Liste 100 übertragen wird. Beispielsweise ist die erste Referenznummer 1 der obersten zweiten Referenznummer der zweiten Liste 200 zugeordnet. Somit werden die Daten der ersten Referenznummer 1 mit der Datenübertragung vom Steuergerät 2 empfangen und/oder gesendet, die durch die Zeile der obersten zweiten Referenznummer der zweiten Liste 200 festgelegt ist.

Der zweite Zuordnungspfeil 520 ordnet die erste Referenznummer 4, das heißt in diesem Fall die Daten der vierten Zeile der erste Liste 100 der zweiten Referenznummer 4, d.h. der zweiten Zeile der zweiten Liste 200 zu. Somit werden die Daten der ersten Referenznummer 4 mit der Datenübertragung vom Steuergerät 2 empfangen und/oder gesendet, die durch die Werte der zweiten Zeile der zweiten Liste 200 festgelegt ist.

Abhängig von der gewählten Ausführungsform können sowohl die erste Liste 100 als auch die zweite Liste 200 mehr oder weniger Spalten und/oder Zeilen aufweisen. Die Zuordnung, die bildhaft durch die Zuordnungspfeile 510, 520 dargestellt ist, kann über externe Steuerbefehle, die vom Steuergerät 2 empfangen werden, verändert werden. Zudem kann die zweite Liste 200 in der Weise ausgebildet sein, dass die Werte der Spalten der zweiten Liste 200 durch den Empfang von externen Steuerbefehlen geändert werden können. Abhängig von der gewählten Ausführungsform ist die erste Liste 100 gegenüber einer Veränderung durch externe Steuerbefehle gesperrt.

Auf diese Weise ist es möglich, nicht nur die Zuordnung der Datenübertragung zu den Referenznummern und damit zu den Daten der ersten Liste 100 während des Betriebes des Steuergerätes 2 zu verändern, sondern es können in die zweite Liste 200 neue Parameter für eine Datenübertragung, insbesondere ein Datenübertragungsprotokoll, eingefügt werden. Zudem können bestehende Werte der zweiten Liste 200 geändert werden.

In einer weiteren Ausführungsform weist die zweite Liste wenigstens einen der folgenden Parameter für die vorgegebene Datenübertragung auf: Art des Netzwerk-Rahmens, Startbit für den Datenrahmen, Typ des Netzwerkes und Auflösung des Netzwerkes. Diese Parameter der Datenübertragung sind nicht abschließend, sondern es können auch andere Parameter der Datenübertragung einer zweiten Referenznummer zugeordnet sein. Durch die Vorgabe wenigstens eines Parameters für die Datenübertragung kann die Art und Weise der Datenübertragung für die Daten einer entsprechend zugeordneten ersten Referenznummer festgestellt werden. Die Art des verwendeten Parameters hängt auch von der Art des verwendeten Netzwerkes ab.

Es können alle Parameter einstellbar sein, die man bei einer Vorkonfiguration auch benötigen würde. Je nach Protokollart können die Parameter leicht unterschiedlich ausfallen. Am Beispiel eines CAN-Bus Protokolls können folgende Parameter geändert werden:
- Mapping zwischen erster und zweiter Referenznummer
- Endianness
- Startbit
- Length
- Signed/Unsigned
- Bus Factor
- Bus Offset
- Internal Norming Factor
- Signal Conversion Factor
- Direction (RX/TX)
- Period
- Validity Range
- Validity Monitoring Timeout
- Frame ID

Zudem kann in der zweiten Liste auch die Art der der Überwachung der Datenübertragung festgelegt sein. Somit kann auch die Überwachung der Datenübertragung umkonfiguriert werden.

Die Werte der ersten Referenznummern der ersten Spalte 110 der ersten Liste 100 entsprechen beispielsweise einem festgelegten Datenport, der vom Steuergerät 2 für den Empfang und das Senden des Datums verwendet wird. Abhängig von der gewählten Ausführungsform kann beispielsweise über den Datenport 1 die Geschwindigkeit des Fahrzeuges 1 empfangen werden. Zudem kann über den Datenport 4 ein Sensorzustand vom Steuergerät 2 zu einem weiteren Steuergerät 9 oder zu einer externen Recheneinheit, wie zum Beispiel ein Testgerät für Diagnose, übermittelt werden.

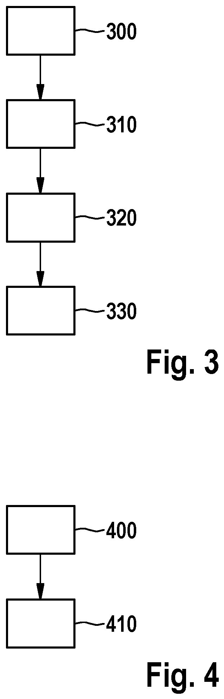

Figur 3 zeigt in einer schematischen Darstellung ein Beispiel für ein Verfahren zum Einstellen wenigstens eines Parameters einer Datenübertragung eines Steuergerätes 2 für ein Fahrzeug. Bei Programmpunkt 300 sendet das Testgerät 10 für die Diagnose über die Schnittstelle 8 ein Anfragesignal zum Starten eines Diagnoseservices. Nach Empfang der Anfrage antwortet bei Programmpunkt 310 das Steuergerät 2 mit einem Erlaubnissignal zum Starten der Diagnose. Bei einem folgenden Programmpunkt 320 empfängt das Testgerät 10 für die Diagnose das Erlaubnissignal und sendet daraufhin einen Steuerbefehl zur Erstellung einer Zuordnung der ersten Referenznummer der zweiten Zeile der ersten Spalte 110 der ersten Liste 100 zu der obersten zweiten Referenznummer der ersten Spalte 210 der zweiten Liste 200. Bei einem folgenden Programmpunkt 330 empfängt das Steuergerät 2 die neue Zuordnung und speichert diese neue Zuordnung ab. In Zukunft wird das Steuergerät 2 die Daten der ersten Referenznummer der zweiten Zeile der ersten Liste 100 mit dem Datenprotokoll empfangen und/oder senden, das durch die zweite Referenznummer 1 der ersten Spalte 210 der zweiten Liste 200 festgelegt ist.

Figur 4 zeigt eine weitere Ausführungsform für ein Verfahren, bei dem Parameter für den Empfang und/oder das Senden von Daten durch das Steuergerät 2 verändert werden. Bei Programmpunkt 400 empfängt das Steuergerät 2 einen Steuerbefehl zum Ändern wenigstens eines Wertes der zweiten Liste 200. Bei einem folgenden Programmpunkt 410 übermittelt das Testgerät 10 die Referenznummer der zu ändernden Daten der zweiten Liste 200 und zusätzlich die Spalte, deren Datum verändert werden soll, und weiterhin den neuen Wert, der in der zweiten Liste 200 anstelle des bisherigen Wertes für die Datenübertragung verwendet werden soll. Beispielsweise wird für die zweite Referenznummer der zweiten Zeile, die den Wert 4 aufweist, für die fünfte Spalte 250 der Wert 0,5 vom Testgerät 10 an das Steuergerät 2 übertragen. Folglich überschreibt das Steuergerät 2 den Wert 1 durch den Wert 0,5 und verwendet in Zukunft für die Datenübertragung der zweiten Referenznummer der zweiten Zeile die Netzwerkauflösung von 0,5 anstelle der bisherigen Netzwerkauflösung 1. In dieser Art und Weise können beliebige einzelne Parameter der Datenübertragung der zweiten Liste 200 verändert werden.

Zudem kann abhängig von der gewählten Ausführungsform eine neue zweite Referenznummer für die erste Spalte 210 mit zugehörigen weiteren Daten für die zweite, dritte, vierte und/oder fünfte Spalte 220, 230, 240, 250 vom Testgerät 10 an das Steuergerät 2 übertragen werden. Bei dieser Ausführung speichert das Steuergerät 2 die neuen empfangenen Daten mit der entsprechenden zweiten Referenznummer und den zugeordneten Werten in die zweite Liste 200 als neue Zeile ein.

Mithilfe des beschriebenen Verfahrens und mithilfe der beschriebenen Vorrichtung kann eine möglichst freie Konfiguration, insbesondere eine freie Zuordnung, eine freie Wahl einer Datenbreite, eine freie Wahl einer Auflösung des Datenprotokolls und eine freie Wahl einer Lage der Nutzdaten in dem Datenprotokoll ausgewählt und/oder festgelegt werden. Dadurch kann eine dynamische Einstellung des verwendeten Datenprotokolls beispielsweise mithilfe von Diagnosebefehlen eines Testgerätes für eine Diagnose ausgeführt werden.

Zudem kann abhängig von der gewählten Ausführungsform eine Änderung und/oder eine Festlegung von neuen Daten für eine zu verwendende Datenübertragung auch von einem zweiten Steuergerät des Fahrzeuges festgelegt werden.

Obwohl die Erfindung im Detail durch die bevorzugten Ausführungsbeispiele beschrieben wurde, ist die Erfindung nicht auf die offenbarten Beispiele eingeschränkt und andere Variationen hieraus können vom Fachmann abgeleitet werden, ohne den Schutzumfang der Erfindung zu verlassen.

## Patentansprüche

1. Steuergerät (2) für ein Fahrzeug (1), mit einer Schnittstelle zum Austauschen von Daten mit einem Sensor, einem Aktor und/oder einer Recheneinheit, mit einem Datenspeicher (7), wobei im Datenspeicher eine erste Liste (100) mit mehreren ersten Referenznummern abgelegt ist, wobei einer ersten Referenznummer wenigstens ein Datum eines Sensors oder Aktors zugeordnet ist, wobei im Datenspeicher eine zweite Liste (200) mit zweiten Referenznummern abgespeichert ist, wobei zu jeder zweiten Referenznummer wenigstens ein Parameter einer Datenübertragung oder einer Überwachung der Datenübertragung abgelegt ist, wobei eine erste Referenznummer über eine veränderbare Zuordnung einer zweiten Referenznummer zugeordnet ist, wobei das Steuergerät ausgebildet ist, die Daten einer ersten Referenznummer gemäß dem Parameter der Datenübertragung der zweiten Referenznummer zu empfangen und/oder zu senden.

2. Steuergerät (2) nach Anspruch 1, wobei das Steuergerät ausgebildet ist, um bei einem Empfang von vorgegebenen Steuerdaten eine festgelegte Zuordnung zwischen einer ersten Referenznummer und einer zweiten Referenznummer zu ändern.

3. Steuergerät (2) nach einem der vorhergehenden Ansprüche, wobei das Steuergerät ausgebildet ist, um nach einem Empfang eines Diagnosesteuerbefehls eine Festlegung und/oder Änderung einer Zuordnung zwischen einer ersten Referenznummer und einer zweiten Referenznummer vorzunehmen.

4. Steuergerät (2) nach einem der vorhergehenden Ansprüche, wobei die vorgegebene Datenübertragung einer zweiten Referenznummer wenigstens einen der folgenden Parameter aufweist: Netzwerk-Rahmen ID, Rahmenstartbit, Netzwerktyp, Netzwerkauflösung.

5. Steuergerät (2) nach einem der vorhergehenden Ansprüche, wobei eine erste Referenznummer wenigstens eines der folgenden Merkmale aufweist: Übertragungsrichtung, Datentyp, Datenname, Datengenauigkeit.

6. Steuergerät (2) nach einem der vorhergehenden Ansprüche, wobei die ersten Referenznummern in einem geschützten Bereich des Speichers abgelegt ist, und wobei die zweiten Referenznummern in einem über externe Steuersignale veränderbaren Bereich des Speichers abgelegt sind.

7. Steuergerät (2) nach einem der vorhergehenden Ansprüche, wobei wenigstens ein Teil der ersten Referenznummern jeweils einem Datenport eines Datenprotokolls zugeordnet ist, und wobei das Steuergerät ausgebildet ist, um die Daten einer ersten Referenznummer über den zugeordneten Datenport des Datenprotokolls zu empfangen und/oder zu senden.

8. Verfahren zum Einstellen wenigstens eines Parameters einer Datenübertragung eines Steuergerätes (2) für ein Fahrzeug (1), wobei das Steuergerät eine Schnittstelle zum Austauschen von Daten eines Sensors oder Aktors mit einer Recheneinheit aufweist, wobei in einem Datenspeicher (7) des Steuergerätes eine erste Liste (100) mit mehreren ersten Referenznummern abgelegt ist, wobei einer ersten Referenznummer wenigstens ein Datum eines Sensors und/oder eines Aktors zugeordnet ist, wobei im Datenspeicher eine zweite Liste (200) mit zweiten Referenznummern abgespeichert ist, wobei zu den zweiten Referenznummern wenigstens ein Parameter einer vorgegebene Datenübertragung oder einer Datenüberwachung zugeordnet ist, wobei bei Empfang eines vorgegebenen Steuerbefehls eine erste Referenznummer einer zweiten Referenznummer zugeordnet wird, wobei die Daten der ersten Referenznummer gemäß der vorgegebenen Datenübertragung der zugeordneten zweiten Referenznummer empfangen und/oder gesendet werden.

9. Verfahren nach Anspruch 8, wobei bei Empfang eines Steuerbefehls in Form eines vorgegebenen Diagnosebefehls eine Zuordnung zwischen einer ersten Referenznummer und einer zweiten Referenznummer vorgenommen oder geändert wird.

10. Verfahren nach einem der Ansprüche 8 oder 9, wobei die vorgegebene Datenübertragung einer zweiten Referenznummer wenigstens eines der folgenden Merkmale aufweist: Netzwerk-Rahmen ID, Rahmenstartbit, Netzwerktyp, Netzwerkauflösung.

11. Verfahren nach einem der Ansprüche 8 bis 10, wobei eine erste Referenznummer wenigstens eines der folgenden Merkmale aufweist: Übertragungsrichtung, Datentyp, Datenname, Datengenauigkeit.

12. Verfahren nach einem der Ansprüche 8 bis 11, wobei die ersten Referenznummern und die den ersten Referenznummern zugeordneten Daten und/oder Signale unveränderbar über empfangene Steuerbefehle abgespeichert sind, und wobei die zweiten Referenznummern über empfangene Steuersignale veränderbar abgespeichert sind.

13. Verfahren nach einem der Ansprüche 8 bis 12, wobei wenigstens ein Teil der ersten Referenznummern jeweils einem Datenport eines Datenprotokolls zugeordnet ist, und wobei die Daten und/oder Signale einer ersten Referenznummer über den zugeordneten Datenport des Datenprotokolls empfangen und/oder gesendet werden.

14. Computerprogrammprodukt, umfassend Befehle, die bei der Ausführung des Programms durch eine Steuereinheit diese veranlassen, das Verfahren nach einem der Ansprüche 8 bis 13 auszuführen.

## Claims

1. Control unit (2) for a vehicle (1), having an interface for interchanging data with a sensor, an actuator and/or a computing unit, having a data memory (7), the data memory storing a first list (100) comprising multiple first reference numbers, a first reference number having at least one associated datum of a sensor or actuator, the data memory storing a second list (200) comprising second reference numbers, at least one parameter of a data transmission or of a monitoring of the data transmission being stored for each second reference number, a first reference number being associated with a second reference number by way of a modifiable association, the control unit being configured to receive and/or send the data of a first reference number according to the parameter of the data transmission of the second reference number.

2. Control unit (2) according to Claim 1, the control unit being configured to respond to receipt of predetermined control data by changing a defined association between a first reference number and a second reference number.

3. Control unit (2) according to either of the preceding claims, the control unit being configured to define and/or change an association between a first reference number and a second reference number after a diagnostic control command is received.

4. Control unit (2) according to one of the preceding claims, the predetermined data transmission of a second reference number having at least one of the following parameters: network frame ID, frame start bit, network type, network resolution.

5. Control unit (2) according to one of the preceding claims, a first reference number having at least one of the following features: transmission direction, data type, data name, data accuracy.

6. Control unit (2) according to one of the preceding claims, the first reference numbers being stored in a protected area of the memory, and the second reference numbers being stored in an area of the memory that can be modified by way of external control signals.

7. Control unit (2) according to one of the preceding claims, each of at least some of the first reference numbers being associated with a data port of a data protocol, and the control unit being configured to receive and/or send the data of a first reference number via the associated data port of the data protocol.

8. Method for adjusting at least one parameter of a data transmission of a control unit (2) for a vehicle (1), the control unit having an interface for interchanging data of a sensor or actuator with a computing unit, a data memory (7) of the control unit storing a first list (100) comprising multiple first reference numbers, a first reference number having at least one associated datum of a sensor and/or an actuator, the data memory storing a second list (200) comprising second reference numbers, at least one parameter of a predetermined data transmission or of a data monitoring being associated with the second reference numbers, receipt of a predetermined control command resulting in a first reference number being assigned to a second reference number, the data of the first reference number being received and/or sent according to the predetermined data transmission of the associated second reference number.

9. Method according to Claim 8, receipt of a control command in the form of a predetermined diagnostic command resulting in an association between a first reference number and a second reference number being made or changed.

10. Method according to either of Claims 8 and 9, the predetermined data transmission of a second reference number having at least one of the following features: network frame ID, frame start bit, network type, network resolution.

11. Method according to one of Claims 8 to 10, a first reference number having at least one of the following features: transmission direction, data type, data name, data accuracy.

12. Method according to one of Claims 8 to 11, the first reference numbers and the data and/or signals associated with the first reference numbers being stored so as to be unmodifiable by way of received control commands, and the second reference numbers being stored so as to be modifiable by way of received control signals.

13. Method according to one of Claims 8 to 12, each of at least some of the first reference numbers being associated with a data port of a data protocol, and the data and/or signals of a first reference number being received and/or sent via the associated data port of the data protocol.

14. Computer program product comprising instructions that, when the program is executed by a control unit, cause said control unit to carry out the method according to one of Claims 8 to 13.

## Revendications

1. Appareil de commande (2) pour un véhicule (1), avec une interface destinée à échanger des données avec un capteur, un actionneur et/ou une unité de calcul, avec une mémoire de données (7), une première liste (100) avec plusieurs premiers numéros de référence étant enregistrée dans la mémoire de données, au moins une donnée d'un capteur ou d'un actionneur étant associée à un premier numéro de référence, une deuxième liste (200) avec des deuxièmes numéros de référence étant sauvegardée dans la mémoire de données, au moins un paramètre d'un transfert de données ou d'une surveillance du transfert de données étant enregistré avec chaque deuxième numéro de référence, un premier numéro de référence étant associé à un deuxième numéro de référence par une association modifiable, l'appareil de commande étant réalisé pour recevoir et/ou envoyer les données d'un premier numéro de référence selon le paramètre du transfert de données du deuxième numéro de référence.

2. Appareil de commande (2) selon la revendication 1, l'appareil de commande étant réalisé pour modifier une association fixée entre un premier numéro de référence et un deuxième numéro de référence lors d'une réception de données de commande spécifiées.

3. Appareil de commande (2) selon l'une des revendications précédentes, l'appareil de commande étant réalisé pour fixer et/ou modifier une association entre un premier numéro de référence et un deuxième numéro de référence après une réception d'une instruction de commande de diagnostic.

4. Appareil de commande (2) selon l'une des revendications précédentes, le transfert de données spécifié d'un deuxième numéro de référence présentant au moins un des paramètres suivants : ID de cadre de réseau, bit de départ de cadre, type de réseau, résolution de réseau.

5. Appareil de commande (2) selon l'une des revendications précédentes, un premier numéro de référence présentant au moins une des caractéristiques suivantes : sens de transfert, type des données, nom des données, exactitude des données.

6. Appareil de commande (2) selon l'une des revendications précédentes, les premiers numéros de référence étant enregistrés dans une zone protégée de la mémoire et les deuxièmes numéros de référence étant enregistrés dans une zone de la mémoire pouvant être modifiée par des signaux de commande externes.

7. Appareil de commande (2) selon l'une des revendications précédentes, au moins une partie des premiers numéros de référence étant associée respectivement à un port de données d'un protocole de données, et l'appareil de commande étant réalisé pour recevoir et/ou envoyer les données d'un premier numéro de référence par le port de données associé du protocole de données.

8. Procédé de réglage d'au moins un paramètre d'un transfert de données d'un appareil de commande (2) pour un véhicule (1), l'appareil de commande comportant une interface destinée à échanger des données d'un capteur ou d'un actionneur avec une unité de calcul, une première liste (100) avec plusieurs premiers numéros de référence étant enregistrée dans une mémoire de données (7) de l'appareil de commande, au moins une donnée d'un capteur et/ou d'un actionneur étant associée à un premier numéro de référence, une deuxième liste (200) avec des deuxièmes numéros de référence étant sauvegardée dans la mémoire de données, au moins un paramètre d'un transfert de données spécifié ou d'une surveillance de données étant associé aux deuxièmes numéros de référence, un premier numéro de référence étant associé à un deuxième numéro de référence lors de la réception d'une instruction de commande spécifiée, les données du premier numéro de référence étant reçues et/ou envoyées selon le transfert de données spécifié du deuxième numéro de référence associé.

9. Procédé selon la revendication 8, une association entre un premier numéro de référence et un deuxième numéro de référence étant effectuée ou modifiée lors de la réception d'une instruction de commande sous la forme d'une instruction de diagnostic spécifiée.

10. Procédé selon l'une des revendications 8 ou 9, le transfert de données spécifié d'un deuxième numéro de référence présentant au moins une des caractéristiques suivantes : ID de cadre de réseau, bit de départ de cadre, type de réseau, résolution de réseau.

11. Procédé selon l'une des revendications 8 à 10, un premier numéro de référence présentant au moins une des caractéristiques suivantes : sens de transfert, type des données, nom des données, exactitude des données.

12. Procédé selon l'une des revendications 8 à 11, les premiers numéros de référence et les données et/ou signaux associés aux premiers numéros de référence étant sauvegardés de manière non modifiable par des instructions de commande reçues, et les deuxièmes numéros de référence étant sauvegardés de manière non modifiable par des signaux de commande reçus.

13. Procédé selon l'une des revendications 8 à 12, au moins une partie des premiers numéros de référence étant associée respectivement à un port de données d'un protocole de données, et les données et/ou signaux d'un premier numéro de référence étant reçus et/ou envoyés par le port de données associé du protocole de données.

14. Produit-programme d'ordinateur comprenant des instructions qui, lors de l'exécution du programme par une unité de commande, amènent celle-ci à exécuter le procédé selon l'une des revendications 8 à 13.
